# EUROPEAN PATENT APPLICATION

(11) **EP 3 043 514 A1**
(43) Date of publication of application: **13.07.2016**
(21) Application number: 15150666.4
(22) Date of filing: 09.01.2015
(51) Int. Cl.: H04L 12/24, H04L 12/703

(54) **A method and system for reconfiguring a network**

(71) Applicant: Xieon Networks S.à r.l., 2633 Senningerberg (LU)
(72) Inventor: Prüssing, Bernd, 81477 Munich (DE); Maierhofer, Johann, 85586 Poing (DE); Frantz, Michael, 83043 Bad Aibling (DE); Riemer, Heiko, 1700-184 Lisbon (PT)
(74) Representative: Lucke, Andreas

(57) **Abstract**

A method for reconfiguring a network comprises a step of storing, in a database, a set of instructions corresponding to a set of events, wherein said instructions are for reconfiguring at least one network element of a network and said instructions pertain to pre-calculated network configurations. In response to receiving an indication of at least one of said events, said instructions corresponding to said at least one event are communicated to said at least one network element.

## Description

### Field of the Invention

The invention relates to a method and system for fast configuration of a network in response to a given event, in particular for optical networks.

### Background of the Invention

A communication network, such as an optical network, usually comprises a plurality of nodes and links, wherein the nodes process, switch and distribute communication traffic, e.g., data traffic, between the links of the network. The network may also comprise control entities for controlling and managing the traffic in the network and the services provided by the network, such as a network management system or network supervising system. Services may use control, processing, switching and transmission resources, which may be combined to form communication channels used by the services to convey information from one point to another point in the network, or across network boundaries towards other networks.

Such networks may be built using different technologies and different infrastructure. One example is an optical fiber network, wherein each fiber has the capability of carrying a multiplicity of different wavelength channels. These networks are commonly known as wavelength division multiplexing (WDM) or dense WDM (DWDM) networks.

In practice, networks are always prone to network failures, such as malfunctions of individual nodes or interruptions of links between nodes. The use of fix protection concepts which allow to restore traffic below 50 milliseconds needs the provisioning of extra physical resources which can be used only for a few dedicated services and require therefore high capital expenditure (CAPEX), and is hence undesirable for network operators.

It is hence desirable that networks are capable of responding to such failures swiftly and efficiently to minimize the interruption of the data traffic across the network, and to restore network capabilities quickly. For instance, network operators may provide the network with some spare equipment that is not required for routine network operation, but may serve to replace failed network components in case of failures. Such spare equipment may be activated quickly if needed, and hence may allow to restore the network traffic within milliseconds.

In an effort to reduce the capital expenditure, software-based restoration techniques have been developed, where available equipment is shared between different services. For instance, if a malfunction is detected, a network supervising system may analyze the malfunction and may automatically perform a re-routing to calculate a new network configuration that restores the network traffic without relying on the failed components. The corresponding configuration parameters may then be sent to the network components, so that the network-components are reconfigured in accordance with the re-calculated communication paths across the network. Examples for software-based restoration techniques are described in GMPLS standards.

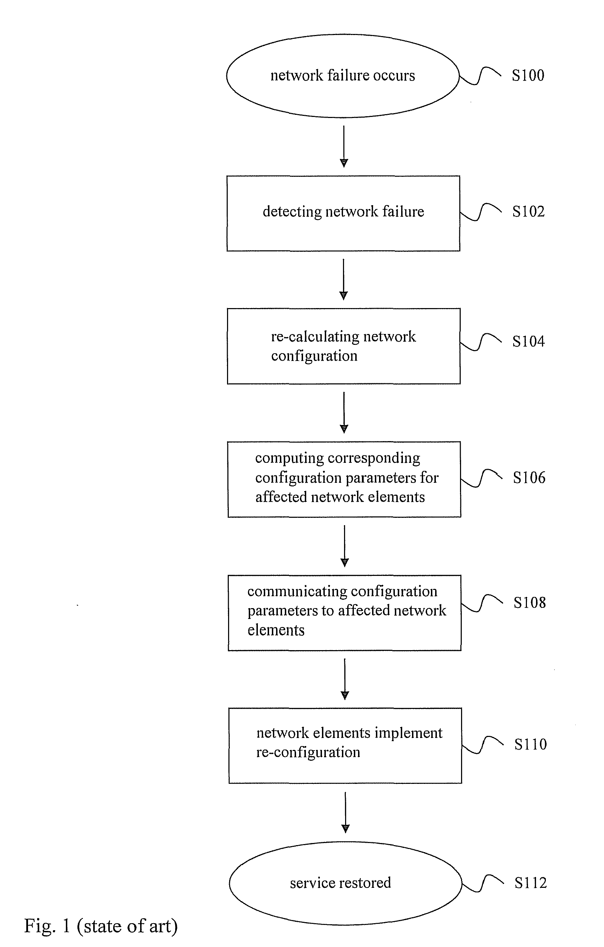

Fig. 1 is a flow diagram that illustrates typical steps in a software-based restoration technique according to the state of the art. In a first step S100, a network failure takes place. For instance, the network failure may be a cut in an optical fiber between two network elements in an optical network. In step S102, a network supervising system detects and localizes the network failure. Depending on the type and location of the network failure, the network supervising system re-calculates the network configuration (step S104) allowing to restore the network service, or to minimize the effects of the failure. The network supervising system may resort to the network configurations defined in the network planning software. Once the new network configuration has been calculated, the network supervising system determines the corresponding configuration parameters for the network elements that need to be reconfigured (step S106). These parameters are then communicated to the affected network elements in step S108, such as over the network itself or over an auxiliary communication network. The affected network elements then change their network parameters to implement the reconfiguration in step S110, and the network service is restored (step S112).

As can be seen from the above discussion, the software-based restoration techniques reduce the capital expenditure, since the restoration is based on the available resources, can be used for many different services to restore and no extra resources are fixed and allocated for protection. However, computing the re-routing in step S104 requires a significant amount of time and computational resources, in particular for large networks. Computing the configuration parameters for the affected network elements in step S106 also requires time. Additional time is needed for communicating the network parameters determined from the calculation to the individual network components in step S108 and processing the new configurations in step S110. As a result, the recovery times in these software-based restoration techniques may be unacceptably long for many applications.

Apart from network restoration in response to failures, there are many other scenarios for which it would be desirable to reconfigure a network quickly, and with low capital expenditure and operational cost. For instance, a network operator may want to reconfigure the communication paths in response to the expected data traffic or the service provider may want to move a given service towards another virtual machine or database quickly depending on external events, wherein the other virtual machine or database can be located at a different site or can be connected via a different port.

### Overview of the Invention

The present invention has been made in view of the problems described above, and with the objectives to reconfigure a network more quickly, automatically and at lower capital expenditure and operational costs. The invention solves these objectives with a method and system for reconfiguring a network according to independent claims 1 and 10, respectively. The dependent claims relate to preferred embodiments.

A method for reconfiguring a network according to the present invention comprises the step of storing, in a database, a set of instructions, said instructions corresponding to a set of events, wherein said instructions are for reconfiguring at least one network element of a network and said instructions pertain to pre-calculated network configurations. The method according to the invention further comprises the steps of receiving an indication of at least one of said events, and, in response to receiving said indication of said at least one event, communicating said instructions corresponding to said at least one event to said at least one network element.

The steps may be performed in this order. In particular, said instructions may be pre-calculated and stored in said database before an event occurs, and hence before an indication of said event is received.

According to the invention, instructions that allow network elements or the entire network to reconfigure may be pre-defined or pre-calculated and pre-stored in a database. These instructions may correspond to a set of pre-defined events. Once one of these events takes place, the corresponding instructions may be sent to the corresponding network elements or a unique trigger is sent to the network elements, instead a set of instructions, triggering the network elements to activate a dedicated set of configurations.

The events may correspond to expected or critical network failures that have been identified when planning or setting up the network, for operational forecast or dedicated operational scenarios. The events may also be time-based events, such as a network reconfiguration that shall take place at a particular date, or at a particular time of the day.

As a response to a given event, the invention allows to automatically reconfigure the network based on the pre-planned response that is pre-calculated and stored as a set of instructions in the database or the network elements.

Dedicated events may be defined by user or the system by evaluating given data which can be for example service profiles, network topology or the network utilization.

In other words, according to the present invention the response to the event, such as a detected network event, a point in time or a dedicated trigger from user or connected system, may be stored in a database or in the network element as a pre-planned response. The invention hence avoids the need of recalculating the new route and the network configuration and computing the corresponding configuration parameters for the affected network elements once the event occurs. This results in a substantial saving of time and computational resources, and allows to reconfigure the network more quickly than with the software-based restoration techniques of the prior art. At the same time, the method according to the present invention may fully rely on the available network equipment, and does not require any additional spare equipment, thereby reducing the capital expenditure.

A network element, in the sense of the present invention, may be any node in the network. For instance, in an optical network, examples of network elements may be network switching units.

In the sense of the present invention, said pre-calculated or pre-defined network configurations may be any configurations relating to the optical network. These configurations may be pre-calculated in the sense that they are provided as a set of configurations before said indication of said at least one of said events is received.

In a preferred embodiment, said pre-calculated network configurations comprise pre-calculated paths between a plurality of network elements and/or a plurality of endpoints of said network.

In a preferred embodiment, said pre-calculated network configurations comprise all possible paths between a plurality of endpoints of said network.

In the sense of the present invention, said instructions may be understood to comprise any data, in any possible format, that comprises information as to how said at least one network element should be reconfigured in response to a corresponding event from among said set of events.

In a preferred embodiment, said instructions comprise configuration parameters pertaining to said at least one network element, wherein said configuration parameters are for setting and/or changing the configuration said at least one network element.

Said configuration parameters may be any parameters pertaining to an operation of said at least one network element. For instance, said configuration parameters may indicate with which other network elements in said network a given network element should establish a communication link. Said parameters may also comprise the corresponding data rates for communication with said other network elements.

In particular, said instructions may comprise configuration parameters for a plurality of network elements of said network, wherein individual configuration parameters are sent to the corresponding network element, thereby setting and/or changing said configuration of said corresponding network element.

In a preferred embodiment, said instructions and/or pre-calculated network configurations may be in accordance with requirements of a given service level agreement.

Said requirements may in particular specify a plurality of endpoints of said network selected for communication and/or a minimum data transfer rate.

Hence, a network reconfiguration may be provided in accordance with the requirements of said given service level agreement.

The network may be reconfigured by sending corresponding configuration parameters to the network elements that should change their configuration in accordance with the pre-planned response to the event.

Alternatively or additionally, said instructions may comprise a configuration identification, said configuration identification corresponding to at least one configuration parameter accessible to said at least one network element.

Preferably, said configuration identification is adapted to cause said at least one network element to set and/or change a configuration of said at least one network element in accordance with said at least one configuration parameter.

In a preferred embodiment, said configuration identification may be adapted to cause said at least one network element to retrieve said at least one configuration parameter from a database.

Said database may be the same database in which said set of instructions is stored, or may be a different database.

According to the latter embodiments, the configuration parameters according to which the network element changes its configuration in response to the event are pre-stored in the network element itself, or in a database accessible to the network element, rather than being communicated to the network element. What is communicated to the network element is merely a configuration identification, which may be any identification suitable to identify the event.

In response to receiving the configuration identification, the network element may in particular retrieve the corresponding configuration parameters from a local or central database, and may then change its network configuration accordingly.

In particular, said instructions may comprise a plurality of configuration identifications corresponding to a plurality of network elements, wherein said configuration identifications correspond to configuration parameters stored in said plurality of network elements.

Said configuration identifications may be adapted to cause said corresponding network elements to set and/or change a configuration of said corresponding network elements in accordance with said configuration parameters.

This allows to reduce the resources and time required for communicating to the affected network elements how they should reconfigure their parameters, thereby speeding up steps S 108 and S110 in the flow diagram of Fig. 1.

In particular, said configuration identification may be a common configuration identification for said plurality of network elements.

For instance, said configuration identification may be a message containing merely a number or other label assigned to a particular event. Upon receiving an indication of an event, said number or label may be communicated to the affected network elements, thereby informing the network elements which event has occurred. The network elements may then themselves reconfigure their parameters in accordance with pre-stored and pre-prepared instructions.

In a preferred embodiment, said events may correspond to detected network parameters and/or correspond to detected network failures.

However, said events may also be time-based events, allowing a network to reconfigure automatically at a particular time of the day or at a particular date.

In general, said events may be events relating to the internal parameters or operation of the network, but may also be external events that are not a priori related to the network.

In a preferred embodiment, the method comprises the step of observing a status of said network.

Said step of observing said status may comprise a step of detecting said event.

In response to the detected event, such as a network failure, the instructions corresponding to said at least one event may then be communicated to said at least one network element.

In a preferred embodiment, the method further comprises the step of detecting a status of said network, and communicating said instructions corresponding to said at least one event to said at least one network element in accordance with said status.

According to the latter embodiment, the response to the event may not only depend on the event itself, but may also depend on a status of said network. This allows a more tailored response.

In the sense of the latter embodiment, a status of said network may comprise any parameters relating to the operation of said network, such as the current or expected network traffic.

For instance, said method may comprise a step of analyzing a current traffic in said network, and communicating said instructions corresponding to said at least one event to said at least one network element in accordance with said analyzed traffic.

Once a failure occurs, restoration may hence take into account the network traffic. Priority may be given to the restoration of those communication paths in a network that carry the highest amount of traffic, or the highest priority traffic.

In a preferred embodiment, the method comprises a step of checking an availability of recourses requires by said pre-calculated network configurations, and communicating said instructions in accordance with said availability.

This allows to check whether resources covered or required by the pre-defined network configurations are indeed available at the time when the event is detected before using them in the reconfiguration of the network.

Said instructions may be adapted to cause said at least one network element to use said resources temporarily or for a specified limited time period.

This allows to temporarily use reserved resources that are currently not in use by other services when reconfiguring the network.

In a preferred embodiment, the method further comprises a step of updating said set of instructions and/or said pre-calculated network configurations in accordance with changes of said network, in particular in accordance with changes of parameters of said network.

This allows to update the user-defined or pre-defined network configurations automatically to reflect changes in the optical network. Once the event occurs, the pre-calculated network configuration takes into account the current network status, and hence no time is lost for calculating the new network configuration.

In a preferred embodiment, said method comprises a step of identifying said set of events, wherein said events are events that require a reconfiguration of said network.

In a preferred embodiment, the method comprises the step of determining said set of instructions for each of said identified events.

For instance, during the network planning stage the network operator may identify a set of events that shall trigger a reconfiguration of the network, or may identify a set of expected or possible network failures for which reconfiguration instructions shall be provided. These events are then incorporated into the set of events for which instructions shall be provided, and the response is pre-calculated and stored in the database.

In a preferred embodiment, said at least one configuration parameter may be stored in said at least one network element.

As described above, this allows to effect the reconfiguration by communicating a mere configuration identification to the network element instead of sending all the reconfiguration parameters.

The invention also relates to a system for reconfiguring a network, comprising a database unit for storing a set of instructions, said instructions corresponding to a set of events, wherein said instructions are for reconfiguring at least one network element of a network and said instructions pertain to pre-calculated network configurations. The system according to the invention further comprises a processing unit for receiving an indication of at least one of said events, said processing unit for communicating said instructions corresponding to said at least one event to said at least one network element in response to receiving said indication of said at least one event.

Said system may be or may form part of or may comprise a network management system or network supervising system.

In a preferred embodiment, said system, in particular said processing unit, may be adapted to implement a method with some or all of the features described above.

In a preferred embodiment, said system may comprise a detection unit for observing a status of said network and/or detecting said event.

The invention also relates to a network comprising a system with some or all of the features described above.

In a preferred embodiment, said network comprises said at least one network element, wherein said instructions comprise a configuration identification, said configuration identification corresponding to at least one configuration parameter, wherein said configuration parameter is accessible to said at least one network element.

Said configuration parameter may be stored in said at least one network element, or may be stored in a database accessible to said at least one network element.

Said at least one network element may be adapted to set and/or to change a configuration of said at least one network element in accordance with said at least one configuration parameter.

The invention also relates to a computer software or to a computer software product comprising computer-readable instructions, said instructions, when read in a computer coupled to a system with some or all of the features as described above, for implementing in said system a method with some or all of the features described above.

### Description of Preferred Embodiments

The features and numerous advantages of the present invention will best be appreciated from a detailed description of preferred embodiments with reference to the accompanying drawings, in which:
- Fig. 1: is a flow diagram of a software-based restoration technique according to the state of the art, as described above;
- Fig. 2: is a flow diagram of a method for reconfiguring a network according to the present invention;
- Fig. 3: is a conceptual diagram illustrating a system for reconfiguring a network according to an embodiment of the present invention; and
- Fig. 4: is a schematic diagram of a database that may be employed in a method and system according to the invention.

The invention will now be described with reference to optical networks. However, one skilled in the art will understand that the invention is not so limited, and may be employed in any kind of physical or virtual network.

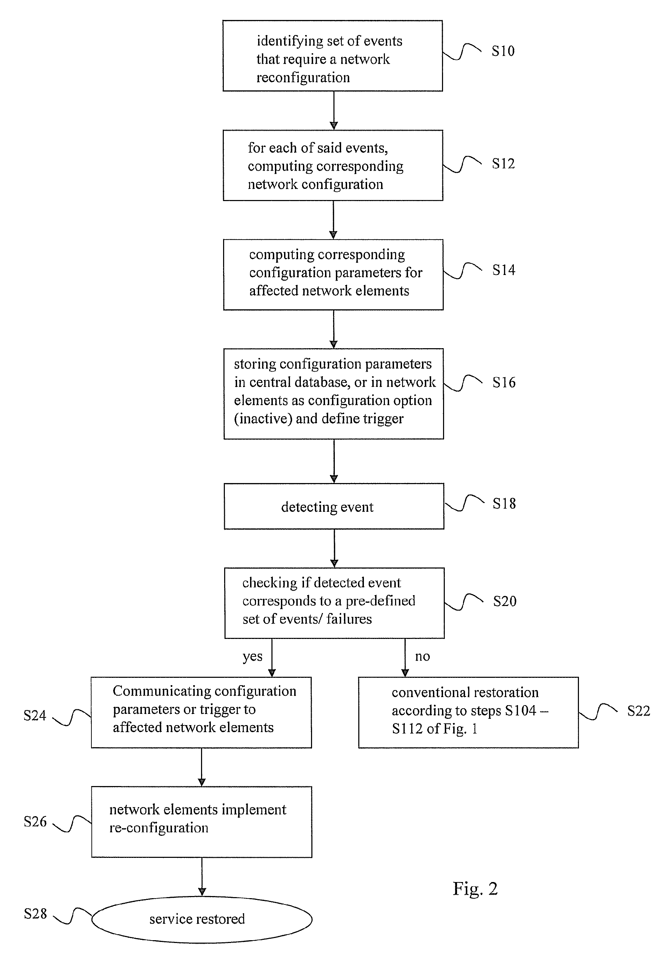

Fig. 2 is a flow diagram illustrating a method for automatically reconfiguring an optical network in response to detected network failures according to a preferred embodiment of the invention.

However, as described above, network failures are just one example of events that may trigger a network reconfiguration according to the present invention. Other examples will be discussed below. In general, events may include increased or decreased demand for a service provided by the network, new services introduced into the network, traffic prioritization, movement of data from one location in the network to another, etc. These examples should be understood in an illustrative rather than in a limiting sense.

In a first step S10, the method involves the identification of a set of network failures that may require a network reconfiguration. This step may already be performed when planning the network configuration or when the service level agreement with the customer is committed, i.e., at a very early stage in the network development. For instance, the network developer may try to identify a set of failures that could possibly occur during the operation of the network or an event that might severely degrade the network performance. This set of events may be identified based on experience with similar networks, or based on stress tests performed with the network in a simulation environment while planning the network.

In a subsequent step S12, for each of said identified network failures, a corresponding network configuration is computed that constitutes a the required network changes in response to the network failure and restores the network service or at least mitigates the effects of the network failure. The network reconfiguration may comprise a re-computation of the communication paths in the network.

Even sophisticated routing may not be able to support the performance which is required for dynamic restoration. Hence, depending on the architecture of the network, S12 may be a time-consuming step.

Once the network reconfiguration has been computed in step S12, the corresponding configuration parameters for the affected network elements are computed in step S14. For instance, these configuration parameters may comprise information indicating to a given network element with which other network elements a communication link shall be established and at which data rates. In general, the configuration parameters may be any physical parameters relating to the operation of the network elements.

The computed configuration parameters are stored in a central database in step S16. For instance, said database may be a database of a network management system or network control system, as they are conventionally used to manage and control network operation in existing optical networks. However, the computed configuration parameters may also be stored decentrally in the network to allow network elements to prepare a 'shadow' configuration to be able to active this configuration if a dedicated trigger is received.

Steps S10 to S16 are part of a preparation phase that takes place before an event occurs, and hence before the need to reconfigure the network arises.

During network operation, a network failure may subsequently be detected by the system which manages the network, such as the network management system (step S18).

The system now checks if the failure that has occurred corresponds to one of the pre-stored events for which a network reconfiguration has been pre-calculated (step S20). If this is not the case, standard restoration techniques, such as a software-based restoration described in the section on the background art with reference to the flow diagram of Fig. 1 can be performed (step S22).

If, on the other hand, the failure that has occurred corresponds to one of the events for which pre-calculated instructions exist in the database, the network supervising system retrieves the corresponding pre-calculated configuration parameters from the database and communicates them to the affected network elements in step S24. The communication may take place over the network itself, or over an auxiliary communication network.

In response to receiving the configuration parameters, the affected network elements then reconfigure their parameters in step S26 accordingly, thereby restoring the service (step S28).

Compared to the conventional software-based restoration technique as described in the section on the background art with reference to the flow diagram of Fig. 1, the embodiment of the present invention according to Fig. 2 is advantageous in that it relegates the time-consuming steps of computing the re-routing of the network (step S12) and computing corresponding configuration parameters for the affected network elements (step S14) to the network planning and/or service provisioning stage, where time and computational resources are less critical. These computations may hence be performed without stringent time constraints for a set of likely or potentially detrimental network failures, and the corresponding configuration parameters for the affected network elements can be stored in a database in advance. Once one of the network failures occurs, no time-consuming computations need to be performed. Rather, the corresponding configuration parameters merely need to be retrieved from the database and sent to the corresponding network elements. This allows to restore network operation within a few milliseconds, and hence much more quickly, than with the software-based restoration techniques of the prior art. Moreover, the restoration method according to the invention may rely entirely on the available equipment in the network, thereby reducing the capital expenditure.

According to this embodiment, no further routing or signaling between the network elements to establish a path (cross-connects), such as might be required in conventional generalized multiprotocol label switching techniques (GMPLS) is required.

Possible network failures that may be accommodated with the method according to the flow diagram of Fig. 2 could be a fiber cut resulting in an outage of an optical multiplex section (OMS) of the network. In that case, all servers routed over the OMS would fail, and alternative paths at least for high priority services can be pre-calculated (S12) alongside with the corresponding configuration parameters for the affected network elements (step S14). Once the fiber cut occurs, the pre-calculated configurations are sent to the affected network elements.

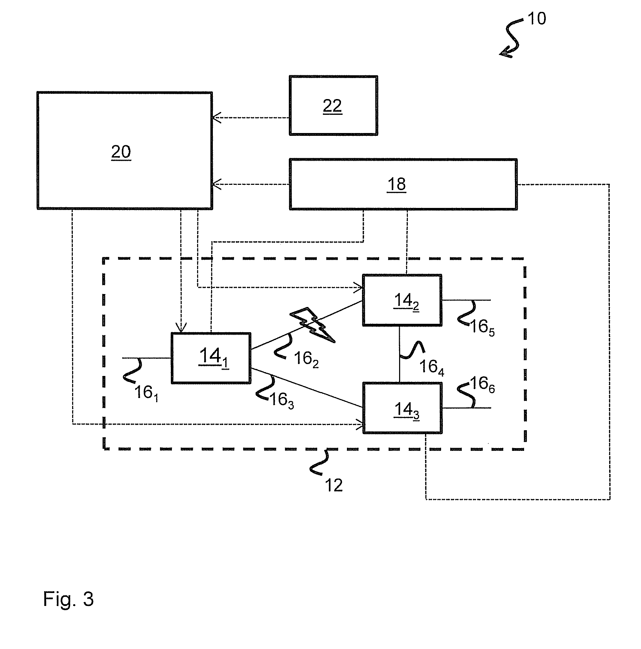

Fig. 3 illustrates a system 10 for reconfiguring a network 12 according to an embodiment of the invention. The network 12 comprises a plurality of network elements 14₁, 14₂, 14₃, ... In generality, the network may comprise any number of network elements, although only three network elements 14₁, 14₂, 14₃ are shown in Fig. 3 for ease of presentation. The network elements 14₁, 14₂, 14₃ are interconnected by means of network links 16₁, 16₂, ..., 16₆, such as optical fiber links.

The optical network 12 shown in Fig. 3 is merely an example. In general, the system 10 for reconfiguring a network may be applied to and used with networks of any type and any given network configuration.

The system 10 further comprises a detection unit 18 for observing a status of the network 12. For instance, the detection unit 18 may be connected to each of the network elements 14₁, 14₂, 14₃, and may receive status parameters from these network elements 14₁, 14₂, 14₃ that indicate their status or level of performance. The detection unit 18 may thereby detect an event which necessitates a network reconfiguration. For instance, the detection unit 18 may receive from the network element 14₂ an indication that it fails to receive signals from the network element 14₁, even though the network element 14₃ continues to receive signal from the network element 14₁. This may indicate a fiber cut in the network link 16₂ connecting the network element 14₂ to the network element 14₁. In Fig. 3, the fiber cut is schematically indicated by a flash of lightning.

The system 10 further comprises a processing unit 20 and a database unit 22. The processing unit 20 is connected both to the database unit 22 and to the detection unit 18.

The processing unit 20 receives from the detection unit 18 an indication of said event, such as a fiber cut. In response to said indication, the processing unit 20 may query the database 22 for a set of instructions that restores the network traffic in case of an interruption in the network link 16₂. For instance, said set of instructions may prescribe to restore network traffic by diverting all network traffic between the network elements 14₁ and 14₂ via the network element 14₃ by means of network links 16₃ and 16₄.

The processing unit 20 communicates the corresponding instructions to the network elements 14₁, 14₂, and 14₃ so that they reconfigure accordingly, and network traffic is restored.

The schematic diagram of Fig. 3 shows the detection unit 18, processing unit 20 and database unit 22 as separate entities. However, in some configurations these elements may be incorporated into a single unit, and/or may be integrated into a network management system for supervising and managing the network 12.

Other failure scenarios that may be accommodated with the method and system according to the invention could be a complete network element outage or an outage of an area of network elements.

Optionally, the pre-defined failure scenarios and/or pre-calculated response may also take into account parameters relating to a status of the network, such as current network traffic. The corresponding network configuration in step S12 can then be calculated not only depending on the set of failures, but also take into account different communication scenarios.

In the embodiment, the network management system detects the current network traffic once a network failure occurs, and the corresponding response is then initiated based on the failure and on the current network traffic. This may allow to give priority in the restoration to those network links that carry higher volume traffic, or higher priority traffic.

For instance, this allows preemption of existing cross-connections based on their priorities. By preempting lower priority traffic, high priority traffic can be quickly restored even if there are no free network resources available.

In the restoration example as described above, the computed configuration parameters for the affected network elements (cf. step S14) are stored in a central database 22 (step S16), such as the database of the network supervising system.

In an alternative embodiment, the computed configuration parameters for the affected network elements may also be stored de-centralized in the network elements themselves. The central database 22 then merely stores a configuration identification parameter corresponding to a network failure. The configuration identification parameter may be a simple ID or number identifying the network failure. Once the network failure has been detected, only the configuration identification rather than the full set of configuration parameters needs to be sent to the network elements. In the case where the configuration identification is an ID/parameter identifying the failure, the communication step may simply involve the broadcast of this configuration identification to all (affected) network elements, rather than sending a plurality of individual sets of configuration parameters to all the affected network elements. Hence, the communication complexity, and the communication time are significantly reduced.

Upon receipt of the configuration identification, the network elements set or change their configuration in accordance with the pre-stored configuration parameters corresponding to the received configuration identification. Hence, the processing is done locally in each network element, and the services can be re-established quickly, even in big networks. No further routing or signaling between the network elements is necessary.

In the embodiments described above, the trigger events are network failures. However, in general, an event that may trigger a network reconfiguration need not necessarily be a network failure, but could also be a routine network maintenance or a network reconfiguration scheduled for a particular time, or scheduled upon receiving a predefined indication. The event can also be defined in terms of a network parameter, such as a parameter observed by the network supervising system, e.g., a bit-error rate of existing services. For instance, based on a monitoring of the quality of the network as given in terms of the bit-error rate, a re-routing to a better path can be triggered.

In another example, the network operator may operate the network in a first network configuration during business hours, where a central data center may be connected to a plurality of client locations. During after-business hours, the network operator may like to switch to a second network configuration in which the client locations are directly interconnected, such as to allow data backups. The network reconfiguration would hence be a change from the first configuration to the second configuration, or vice-versa, in response to a time parameter.

Also in this case, the method may comprise checks to determine if any predefined configuration may affect running traffic in the network.

In another example, a service provider may like to move a network service to a different virtual machine, which can be located on a different site or can be connected via a different port, in response to a predefined external event. Provisions for such a network reconfiguration or modification may already be made in the service level agreement (SLA), which defines the topology, quality (e.g., latency) and the availability (e.g., resilience type, requirements for the restoration) of a service. In this application, all potential connections for a dedicated subscriber service, including network reconfigurations/modifications, may be calculated on the basis of the SLA in advance for real-time provisioning of services. These connections may continuously be re-calculated in the background depending on the network usage. Such an enhanced SLA may contain for a subscriber not only the endpoints which will finally be used at one dedicated point in time, but all possible endpoints for one dedicated service. In other words, instead of two endpoints defining the connection between two sides of the subscriber, in general an integer number n endpoints can be defined for this service, n > 2.

As an example, a subscriber may want to have a connection provisioned in milliseconds between four possible sites/endpoints. The corresponding service level agreement would then not only define the endpoints that are valid for one given point in time, but all four potential endpoints. In this scenario, six connections would be pre-calculated in advance, i.e., each possible connection between any two sides which fulfill the routing constraints.

In accordance with the invention, the connections and the required configuration changes are calculated in advance of the service request based on potential service requests. These configurations may be stored in the central database 22 of the network management system.

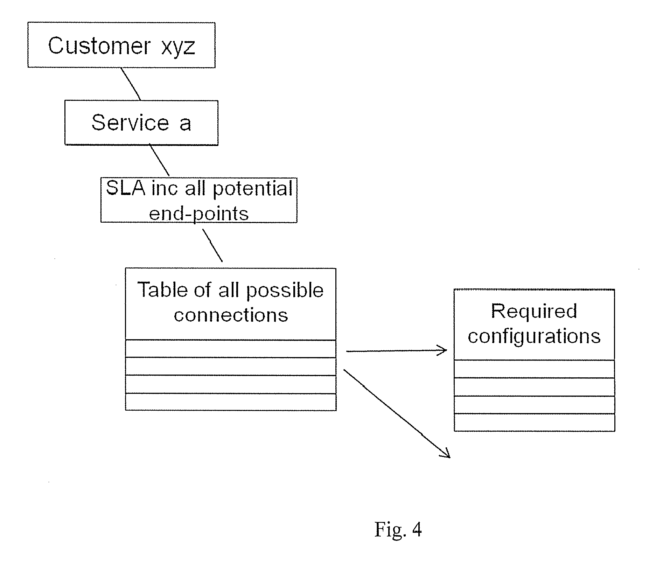

Fig. 4 shows an example of a corresponding database scheme. For a given customer xyz and a given service a, the service level agreement may comprise all potential endpoints. Based on this enhanced SLA, a table of all possible connections is determined, and the corresponding configuration parameters for the affected network elements are stored in the database.

Once the corresponding connections shall be established, the corresponding configurations of the affected network elements are retrieved from the database 22, and are sent to the corresponding network elements to allow the network elements to reconfigure accordingly. Alternatively, as described above, the configurations may be pre-stored in the network elements, and the network management system may send a mere configuration identification parameter to the affected network elements. This allows the services to be configured, modified and restored in the network very quickly, in the range of milliseconds. In addition, the computational load on the network management system and/or data communication network during operation of the network is reduced.

The description of the preferred embodiments and the drawings merely serve to illustrate the invention, but should not be understood to imply any limitation. The scope of the invention shall be determined based on the appended claims.

**Reference Signs**

| | |
|---|---|
| 10 | system for reconfiguring a network |
| 12 | network |
| 14, 14₂, 14₃ | network elements of network 12 |
| 16₁, 16₂, ..., 16₆ | network links |
| 18 | detection unit |
| 20 | processing unit |
| 22 | database unit |

## Claims

1. A method for reconfiguring a network (12), comprising:
storing, in a database (22), a set of instructions, said instructions corresponding to a set of events, wherein said instructions are for reconfiguring at least one network element (14₁, 14₂, 14₃) of a network (12) and said instructions pertain to pre-calculated network configurations;
receiving an indication of at least one of said events; and
in response to receiving said indication of said at least one event, communicating said instructions corresponding to said at least one event to said at least one network element (14₁, 14₂, 14₃).

2. The method according to claim 1, wherein said instructions comprise configuration parameters pertaining to said at least one network element (14₁, 14₂, 14₃), said configuration parameters for setting and/or changing a configuration of said at least one network element (14₁, 14₂, 14₃).

3. The method according to claim 1 or 2, wherein said instructions comprise a configuration identification, said configuration identification corresponding to at least one configuration parameter accessible to said at least one network element (14₁, 14₂, 14₃), wherein said configuration identification is adapted to cause said at least one network element (14₁, 14₂, 14₃) to set and/or change a configuration of said at least one network element (14₁, 14₂, 14₃) in accordance with said at least one configuration parameter.

4. The method according to any of the preceding claims, wherein said events are time-based and/or correspond to detected network parameters and/or correspond to detected network failures.

5. The method according to any of the preceding claims, further comprising a step of observing a status of said network (12), wherein said step of observing said status comprises detecting said event.

6. The method according to any of the preceding claims, further comprising a step of detecting a status of said network (12), and communicating said instructions corresponding to said at least one event to said at least one network element (14₁, 14₂, 14₃) in accordance with said status.

7. The method according to any of the preceding claims, further comprising a step of updating said set of instructions and/or said pre-calculated network configurations in accordance with changes of said network (12).

8. The method according to any of the preceding claims, further comprising the steps of:
identifying said set of events, wherein said event are events that require a reconfiguration of said network (12); and
for each of said events, determining said set of instructions.

9. The method according to claim 7 and claim 3, further comprising a step of storing said at least one configuration parameter in said at least one network element (14₁, 14₂, 14₃).

10. A system (10) for reconfiguring a network, comprising:
a database unit (22) for storing a set of instructions, said instructions corresponding to a set of events, wherein said instructions are for reconfiguring at least one network element (14₁, 14₂, 14₃) of a network (12) and said instructions pertain to pre-calculated network configurations; and
a processing unit (20) for receiving an indication of at least one of said events; and
said processing unit (20) for communicating said instructions corresponding to said at least one event to said at least one network element (14₁, 14₂, 14₃) in response to receiving said indication of said at least one event.

11. The system (10) according to claim 10, further comprising a detection unit (18) for observing a status of said network (12) and/or detecting said event.

12. The system (10) according to claim 10 or 11, wherein said system (10) is or forms part of a network management system.

13. A network (12) comprising a system (10) according to any of the claims 10 to 12.

14. The network (12) according to claim 13, wherein said network (12) comprises said at least one network element (14₁, 14₂, 14₃), wherein said instructions comprise a configuration identification, said configuration identification corresponding to at least one configuration parameter, wherein said configuration parameter is accessible to said at least one network element (14₁, 14₂, 14₃), wherein said at least one network element (14₁, 14₂, 14₃) is adapted to set and/or change a configuration of said at least one network element (14₁, 14₂, 14₃) in accordance with said at least one configuration parameter.

15. A computer software or computer software product comprising computer-readable instructions, said instructions, when read in a computer coupled to a system (10) according to any of the claims 10 to 14, for implementing in said system (10) a method according to any of the claims 1 to 9.
